(19) Europäisches Patentamt
European Patent Office
Office européen des brevets

(11) Publication number: **0 111 694**
**B1**

(12) # EUROPEAN PATENT SPECIFICATION

(45) Date of publication of patent specification: **26.07.89**

(51) Int. Cl.$^4$: **C 08 G 18/30**, C 08 G 18/10, C 08 G 18/76, C 08 L 75/04, C 08 K 5/13

(21) Application number: **83110745.3**

(22) Date of filing: **27.10.83**

(54) **Polyurethane elastomers from hindered aliphatic diisocyanates.**

(30) Priority: **17.12.82 US 450627**

(43) Date of publication of application:
**27.06.84 Bulletin 84/26**

(45) Publication of the grant of the patent:
**26.07.89 Bulletin 89/30**

(84) Designated Contracting States:
**AT BE CH DE FR GB IT LI NL SE**

(56) References cited:
**FR-A-2 242 436**
**FR-A-2 328 726**
**FR-A-2 331 577**
**GB-A-1 005 877**
**US-A-3 925 319**

**JOURNAL OF CELLULAR PLASTICS, vol. 18, no. 6, November-December 1982, Westport, Connectiut, USA; V.D. ARENDT et al. "m- and p-TMXDI: Two new isocyanates for the polyurethane industry", pages 376-383**

(73) Proprietor: **AMERICAN CYANAMID COMPANY**
**1937 West Main Street P.O. Box 60**
**Stamford Connecticut 06904-0060 (US)**

(72) Inventor: **Bezwada, Rao Srinivasa**
**One Nevius Road**
**Whitehouse Station New Jersey 08889 (US)**

(74) Representative: **Wächtershäuser, Günter, Dr.**
**Tal 29**
**D-8000 München 2 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 111 694 B1

**Description**

Hindered aliphatic diisocyanates of the formula:

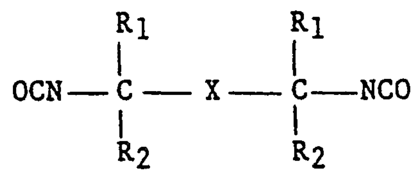

(I)

wherein R is hydrogen or $C_1$—$C_8$ alkyl, $R_2$ is $C_1$—$C_8$ alkyl or substituted $C_1$—$C_8$ alkyl, and X represents a bridging unit, are known and described in the patent literature, as for example in US—A—2,723,265, and US—A—3,290,350. Diisocyanates defined by formula (I) wherein both $R_1$ and $R_2$ are methyl and X is an arylene bridging group, that is, of the formula:

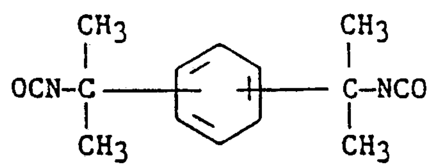

(II)

are readily prepared by the procedure described in US—A—3290350. These diisocyanates are useful in a wide range of polyurethane products, especially in castable and thermoplastic elastomer compositions, by application of well defined conventional polyurethane forming techniques.

Diisocyanates of the type described above may be secondary or tertiary. When they are used in the preparation of isocyanate-terminated prepolymers or in the preparation of thermoplastic polyurethanes for elastomer end-use applications, it is found that the physical properties of the resulting products exhibit marked deterioration upon aging in air at elevated temperatures and additionally exhibit discoloration. This is especially true when the tertiary diisocyanates of formula (II) are used. Moreover, it is found that this deterioration is not totally inhibited by the exclusion of air, as for example by aging the products in a nitrogen atmosphere. Since the elastomeric products obtained from these diisocyanates exhibit excellent properties initially, it is desirable to determine means to preserve these properties throughout the aging process, or at least to preserve them to an acceptable degree.

It is, therefore, a principal object of the present invention to achieve stabilization of elastomeric products of the above-described type against deterioration when exposed to elevated temperatures in air. It is another object of the invention to provide polyurethane elastomers formed from hindered aliphatic diisocyanates which exhibit excellent physical properties and resistance to discoloration.

This object is solved in accordance with the present invention by a method of preparing a polyurethane elastomer resistant to deterioration on ageing at elevated temperature, said method comprising

A. combining at temperatures below about 60°C and in the presence of moisture

(a) an aliphatic diol or polyol,

(b) an aliphatic diisocyanate of the formula

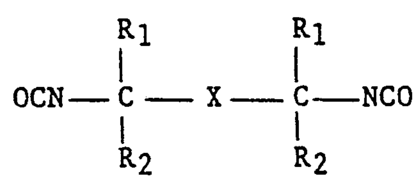

(I)

or an isocyanate terminated prepolymer derived therefrom, wherein $R_1$ is hydrogen or $C_1$—$C_8$ alkyl, $R_2$ is $C_1$—$C_8$ alkyl or substituted $C_1$—$C_8$ alkyl, and X is an arylene bridging group, said aliphatic diisocyanate or prepolymer being no more than very slowly reactive with water at temperatures up to about 60°C,

(c) a diisocyanate which will react rapidly with water at temperatures below 60°C, in an amount sufficient to react with substantially all water present in the reaction mixture, and

B. after reaction of said water in the mixture with said diisocyanate (c) at temperatures below 60°C, increasing the temperature of the mixture to initiate reaction of said diol or polyol (a) with said aliphatic diisocyanate or prepolymer (b) to make a polyurethane elastomer.

Preferred embodiments of the invention are defined in the subclaims.

The hindered aliphatic diisocyanates of formula (I) in general react very slowly with water at temperatures up to 60°C in the absence of a catalyst. Moreover, these diisocyanates are hygroscopic and reaction mixtures prepared from them may contain up to and above 0.5 weight percent moisture. In the presence of

a catalyst to promote the reaction of the isocyanate with the curative compound, water will react in competition with the curative compound at curing temperatures, which are generally in the range of 80 to 100°C, and this may result in amine termination, with concomitant foaming, and in loss of physical properties, discoloration and oxidative instability.

It has been found that the addition of a suitable diisocyanate (c) and a suitable radical scavenger compound to the reaction mixture, before the curing reaction commences, will result in retention of physical properties throughout the aging process and also in reduction of discoloration.

Suitable diisocyanates (c), readily available commercially, are those which react rapidly with water at temperatures below normal curing temperatures, and include, but are not limited to, the following:

Methylenebis(phenyl isocyanate),
Tolylene diisocyanate (2,4- and/or 2,6-),
Phenylene diisocyanate,
Xylene diisocyanate,
Naphthalene diisocyanate.

Methylenebis(phenyl isocyanate) is a preferred diisocyanate (c).

The amount of diisocyanate (c) added to the reaction mixture will at least be sufficient to react with the moisture present in the reaction mixture before curing. In general, about 1—2% by weight of the diisocyanate (c) based on the total weight of the elastomer composition is sufficient to provide protection against reaction of the aliphatic isocyanate groups with water at curing temperatures. Additional amounts of the diisocyanate (c), that is, in excess of the amount needed to react with the moisture present in the reaction mixture, may be added to the reaction mixture prior to curing thereof, but in general provides no further advantage.

Suitable radical scavengers are primary hindered phenol antioxidants of the type normally used to protect polymeric substrates against oxidative deterioration. Such compounds are readily available commercially and include, but are not limited to, the following: Tetrakis[methylene-2-(2′,5′-di-t.butyl-4′-hydroxyphenyl)propionate]methane — Irganox® 1010, Ciba-Geigy; 2,2′-Methylenebis(4-ethyl-6-t.butylphenol) — CYANOX® 425, American Cyanamid; 2,2′-methylenebis(4-methyl-6-t.butylphenol) — CYANOX® 2246, American Cyanamid; tris(4-t.butyl-3-hydroxy-2,6-dimethylbenzyl)-s-triazine-2,4,6-(1H, 3H, 5H)trione — CYANOX® 1790, American Cyanamid; octadecyl-3-(3′,5′-di-t.butyl-4′-hydroxyphenyl)propionate — Irganox® 1076, Ciba-Geigy; thiodiethylenebis(3,5-di-t.butyl-4-hydroxy)hydrocinnamate — Irganox® 1035, Ciba-Geigy; distearyl(2,6-di-t.butyl-4-hydroxyphenyl)phosphate — Irganox® 1093, Ciba-Geigy; tris(2,4-di-t.butylphenol)phosphite — Irgaphos® 168, Ciba-Geigy; and 1,1,3-tri(5-t.butyl-4-hydroxy-2-methylphenol)-butane — Topanol CA®, ICI. The preferred radical scavenger is Irganox® 1010.

The amount of radical scavenger incorporated into the elastomer composition prior to curing will ordinarily range from 0.05 to 1.0 percent by weight, based on the total weight of elastomer composition. Preferably, the radical scavenger compound will be used in an amount ranging from 0.1 to 0.5 percent by weight, based on total weight of the elastomer composition.

The diisocyanate (c) may be added either to the hindered aliphatic diisocyanate or to the isocyanate-terminated prepolymer, in both instances prior to curing at elevated temperatures. The method used may vary depending on the product to be prepared, that is, whether a castable polyurethane or a thermoplastic polyurethane is to be produced. In general, castable polyurethanes are made by pre-forming an isocyanate-terminated prepolymer and then curing the prepolymer with a curative compound. In this type of system it is preferable to add the diisocyanate (c) to the prepolymer prior to curing. Thermoplastic elastomers may be made by reacting essentially stoichiometric amounts of one or more diols or polyols with a diisocyanate or by reacting together essentially stoichiometric amounts of a prepolymer and one or more diols (or polyols). In general, it is preferable to add the diisocyanate (c) to the prepolymer, when used; alternatively, it may be added to the aliphatic diisocyanate before curing at an elevated temperature.

The radical scavenger may be incorporated into the compositions at any convenient point before or during the curing step. The easiest and most convenient method is to incorporate the radical scavenger into either the prepolymer or one or more of the diol or polyol curative compounds. It is only important that the radical scavenger be incorporated in the resulting elastomeric product.

The invention is illustrated by the following non-limiting examples, in which all parts and percentages are by weight, unless otherwise specified.

## Example 1

An isocyanate terminated prepolymer was prepared by reacting 2.05 moles of α,α,α′,α′-tetramethyl-p-xylylene diisocyanate with 1.0 mole of polytetramethylene ether glycol (mol wt 2000) at 80—82°C. The resulting prepolymer contained 5.74% NCO. This was cured in a mold at 100°C using a curative consisting of 93 percent by weight of 1,4-butanediol and 7 percent by weight of trimethylol propane (NCO/OH = 1). After two hours in the mold, the elastomer was tested for stress-strain properties. Similar specimens were prepared and subjected to a post-cure at 100°C in a circulating air oven for 16 hours and 40 hours before testing. Test data are given below in Table I.

TABLE I

| Cure Time (Hrs) | 2 | 16 | 40 |
|---|---|---|---|
| Modulus, 100%, MPa | 4.83 | 6.21 | 3.45 |
| 200%, MPa | 6.21 | 6.90 | 4.14 |
| 300%, MPa | 8.28 | 8.28 | -- |
| Tensile, MPa | 29.0 | 11.7 | 4.83 |
| Elongation, % | 600 | 500 | 300 |
| Hardness, Shore A | 90 | 94 | 90 |

These data clearly illustrate the deterioration of the elastomer on aging in air at 100°C, particularly in the modulus and tensile properties.

Example 2

The procedure of Example 1 was repeated except that the specimens were post-cured at 100°C for 16 and 40 hours under a nitrogen atmosphere. Data obtained are shown in Table II.

TABLE II

| Cure Time (Hrs) | 2 | 16 | 40 |
|---|---|---|---|
| Modulus, 100%, MPa | 4.83 | 5.52 | 5.52 |
| 200%, MPa | 6.21 | 7.59 | 7.59 |
| 300%, MPa | 8.28 | 10.4 | 9.66 |
| Tensile, MPa | 29.0 | 31.7 | 20.7 |
| Elongation, % | 600 | 600 | 700 |
| Hardness, Shore A | 90 | 91 | 90 |

Comparison of the data in Table II with the data shown in Table I clearly illustrates that aging of the elastomers in air results in deterioration while aging in nitrogen atmosphere does not, thereby indicating an oxidative process.

Example 3

The procedure of Example 1 was followed except that 2% by weight of MDI — methylenebis(phenylisocyanate) — was added to the prepolymer before curing. The prepolymer contained 6.34% NCO. Cures were made at NCO/OH ratios of 1.0 and 0.95. The elastomers were then post-cured in air for 16 hours and 40 hours. Data are given in Table III.

TABLE III

| Cure Time (Hrs) | 2 | 16 | 40 |
|---|---|---|---|
| Stoichiometry | 0.95/1.0 | 0.95/1.0 | .95/1.0 |
| Modulus, 100%, MPa | 5.52/5.52 | 5.52/6.21 | 6.21/6.9 |
| 200%, MPa | 6.21/6.9 | 6.9/7.59 | 6.9/-- |
| 300%, MPa | 8.28/8.97 | 8.97/9.66 | --/-- |
| Tensile, MPa | 28.3/30.4 | 26.9/18.6 | 8.28/8.28 |
| Elongation, % | 590/610 | 630/640 | 320/205 |
| Hardness, Shore A | 90/90 | 90/92 | 93/94 |

Example 4

The procedure of Example 3 was followed except that the prepolymer was cured with a mixture of 93% by weight of 1,4-butanediol and 7% by weight of aminopropanediol. Data are shown in Table IV.

TABLE IV

| Cure Time (Hrs) | 2 | 16 | 40 |
|---|---|---|---|
| Stoichiometry | 0.95/1.0 | 0.95/1.0 | 0.95/1.0 |
| Modulus, 100%, MPa | 5.52/5.52 | 5.52/6.21 | 6.21/6.9 |
| 200%, MPa | 6.21/6.21 | 6.9/7.59 | 6.9/7.59 |
| 300%, MPa | 8.28/8.28 | 9.66/9.66 | 8.28/8.28 |
| Tensile, MPa | 24.2/28.3 | 24.2/16.6 | 8.97/8.28 |
| Elongation, % | 640/580 | 620/590 | 340/320 |
| Hardness, Shore A | 90/90 | 90/92 | 92/94 |

Example 5

A prepolymer was prepared as described in Example 1. The prepolymer was then divided into three portions: to one portion (A) was added 2% by weight of MDI; to a second portion (B) was added 2% by weight of MDI and 0.5 percent by weight of an antioxidant, Irganox® 1010; and a third portion (C) was a control.

All of the prepolymers were cured for 90 minutes at 100°C using the curative of Example 4. Stress-Strain data were obtained as described in Examples 1—4. Data are given in Table V.

**TABLE V**

| Sample | A | | | B | | | C | | |
|---|---|---|---|---|---|---|---|---|---|
| Cure Time (Hrs) | 2 | 16 | 40 | 2 | 16 | 40 | 2 | 16 | 40 |
| Modulus, 100%, MPa | 6.42 | 7.84 | 7.38 | 6.71 | 8.07 | 8.25 | 7.21 | 7.19 | - |
| 300%, MPa | 9.42 | 11.67 | 10.10 | 9.46 | 11.92 | 12.16 | 10.14 | - | - |
| Tensile, MPa | 23.86 | 21.12 | 11.55 | 24.38 | 18.12 | 17.36 | 19.27 | 9.84 | 5.41 |
| Elongation, % | 688 | 596 | 423 | 658 | 639 | 600 | 579 | 384 | 74 |
| Hardness, Shore A | 93 | 93 | 93 | 92 | 94 | 94 | 94 | 93 | 93 |

**Claims**

1. A method of preparing a polyurethane elastomer resistant to deterioration on ageing at elevated temperature, said method comprising

A. combining at temperatures below about 60°C and in the presence of moisture

(a) an aliphatic diol or polyol,

(b) an aliphatic diisocyanate of the formula

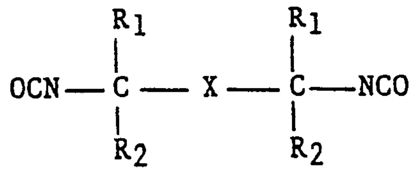

or an isocyanate terminated prepolymer derived therefrom, wherein $R_1$ is hydrogen or $C_1$—$C_8$ alkyl, $R_2$ is $C_1$—$C_8$ alkyl or substituted $C_1$—$C_8$ alkyl, and X is an arylene bridging group, said aliphatic diisocyanate or prepolymer being no more than very slowly reactive with water at temperatures up to about 60°C,

(c) a diisocyanate which will react rapidly with water at temperatures below 60°C, in an amount sufficient to react with substantially all water present in the reaction mixture, and

B. after reaction of said water in the mixture with said diisocyanate (c) at temperatures below 60°C, increasing the temperature of the mixture to initiate reaction of said diol or polyol (a) with said aliphatic diisocyanate or prepolymer (b) to make a polyurethane elastomer.

2. A method according to claim 1, wherein the reaction temperature of step B. is in the range from 60°C to 100°C.

3. A method according to claim 1 or 2, wherein a radical scavenger compound is incorporated to the reaction mixture during step A. or B.

4. A method according to claim 3, wherein said radical scavenger compound is a hindered phenol compound.

5. A method according to claim 4, wherein from 0.05 to 1.0% by weight, based on the total weight of said elastomer, of said hindered phenol radical scavenger compound is used.

6. A method according to any of claims 1 to 5, wherein said diisocyanate (c) is selected from the group consisting of methylene-bis(phenylisocyanate); 2,4-tolylene diisocyanate; 2,6-tolylene diisocyanate; phenylene diisocyanate; xylene diisocyanate; and naphthalene diisocyanate.

7. A method according to any of claims 1 to 6, wherein said aliphatic diisocyanate (b) is a compound of the formula

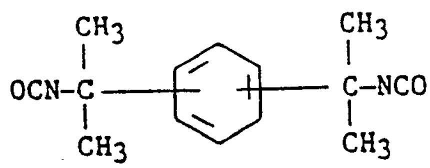

8. A method according to any of claims 1 to 7, wherein said isocyanate-terminated prepolymer is a product of reaction of one or more polyols with a stoichiometric excess of said aliphatic diisocyanate.

9. A method according to any of claims 1 to 8, wherein essentially stoichiometric amounts of said aliphatic diisocyanate (b) and said diol or polyol (a) are employed.

10. A polyurethane elastomer obtainable by the method of any of claims 1 to 9.

**Patentansprüche**

1. Verfahren zur Herstellung eines Polyurethanelastomeren, das beständig ist gegen Beeinträchtigung durch Altern bei erhöhter Temperatur, wobei man

A) bei Temperaturen, die niedriger sind als etwa 60°C und in Gegenwart von Feuchtigkeit folgende Komponenten kombiniert:

(a) ein aliphatisches Diol oder Polyol,

(b) ein aliphatisches Diisocyanat der Formel

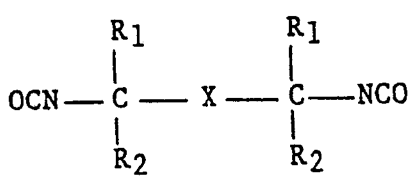

oder ein daraus stammendes Isocyanat-terminiertes Präpolymeres, wobei $R_1$ für Wasserstoff oder $C_{1-8}$-

Alkyl steht, $R_2$ für $C_{1-8}$-Alkyl oder substituiertes $C_{1-8}$-Alkyl steht und X für eine Arylen-Brückengruppe steht, wobei das erwähnte aliphatische Diisocyanat oder Präpolymere bei Temperaturen bis etwa 60°C nur sehr langsam mit Wasser reagiert,

(c) ein Diisocyanat, welches mit Wasser bei Temperaturen unter 60°C rasch reagiert, in einer Menge, die ausreicht, um mit im wesentlichen sämtlichem Wasser in der Reaktionsmischung zu reagieren, und

B) nach Umsetzung des Wasser in der Mischung mit dem erwähnten Diisocyanat (c) bei Temperaturen unter 60°C die Temperatur der Mischung erhöht, um die Reaktion des erwähnten Diols oder Polyols (a) mit dem erwähnten aliphatischen Diisocyanat oder Präpolymeren (b) zu starten, um ein Polyurethanelastomeres herzustellen.

2. Verfahren gemäß Anspruch 1, wobei die Reaktionstemperatur der Stufe B) im Bereich von 60°C bis 100°C liegt.

3. Verfahren gemäß Anspruch 1 oder 2, wobei der Reaktionsmischung bei Stufe A) oder B) eine Radikalfänger-Verbindung einverleibt ist.

4. Verfahren gemäß Anspruch 3, wobei die Radikalfänger-Verbindung eine gehinderte Phenolverbindung ist.

5. Verfahren gemäß Anspruch 4, wobei von 0,05 bis 1,0 Gew.-% bezogen auf das Gesamtgewicht des Elastomeren, der erwähnten gehinderten Phenol-Radikalfänger-Verbindung verwendet werden.

6. Verfahren gemäß einem der Ansprüche 1 bis 5, wobei das erwähnte Diisocyanat (c) ausgewählt ist aus der Gruppe bestehend aus Methylen-bis(phenylisocyanat); 2,4-Tolylendiisocyanat; 2,6-Tolylendiisocyanat; Phenylendiisocyanat; Xylendiisocyanat und Naphthalindiisocyanat.

7. Verfahren gemäß einem der Ansprüche 1 bis 6, wobei das erwähnte aliphatische Diisocyanat (b) eine Verbindung der folgenden Formel ist:

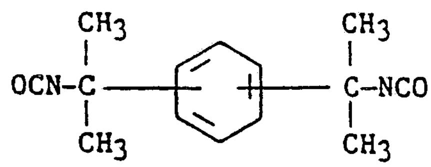

8. Verfahren gemäß einem der Ansprüche 1 bis 7, wobei das erwähnte Isocyanat-terminierte Präpolymere ein Produkt der Umsetzung von einem oder mehreren Polyolen mit einem stöchiometrischen Überschuß des erwähnten aliphatischen Diisocyanats ist.

9. Verfahren gemäß einem der Ansprüche 1 bis 8, wobei man im wesentlichen stöchiometrische Mengen des erwähnten aliphatischen Diisocyanats (b) und des erwähnten Diols oder Polyols (a) einsetzt.

10. Polyurethanelastomeres, erhältlich nach dem Verfahren gemäß einem der Ansprüche 1 bis 9.

**Revendications**

1. Procédé de préparation d'un élastomère de polyuréthanne, résistant à la dégradation par vieillissement à température élevée, dans lequel:

A. on réunit à des températures inférieures à environ 60°C et en présence d'humidité:

(a) un diol ou un polyol aliphatique,

(b) un diisocyanate aliphatique de formule:

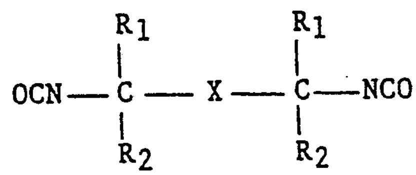

ou un prépolymère à terminaison isocyanate dérivé de celui-ci, dans lequel $R_1$ représente un atome d'hydrogène ou un groupe alkyle en $C_1$—$C_8$, $R_2$ représente un groupe alkyle en $C_1$—$C_8$ ou un groupe alkyle substitué en $C_1$—$C_8$, et X représente un groupe de pontage arylène, ce diisocyanate aliphatique ou ce prépolymère, ne réagissant pas plus que très lentement avec l'eau à des températures allant jusqu'à environ 60°C,

(c) une diisocyanate qui réagit rapidement avec l'eau à des températures inférieures à 60°C, selon une quantité suffisante pour réagir avec presque toute l'eau présente dans le mélange réactionnel, et

B. on accroît, après la réaction de l'eau présente dans le mélange avec le diisocyanate (c) à des températures inférieures à 60°C, la température du mélange pour démarrer la réaction du diol ou du polyol (a) avec le diisocyanate aliphatique ou le prépolymère (b) et former un élastomère de polyuréthanne.

2. Procédé selon la revendication 1, dans lequel la température réactionnelle de l'étape B, est dans la plage de 60°C à 100°C.

3. Procédé selon la revendication 1 ou 2, dans lequel on incorpore un composé de blocage de groupe, dans le mélange réactionnel au cours de l'étape A ou B.

4. Procédé selon la revendication 3, dans lequel ledit composé de blocage de groupe, est un composé phénolique encombré.

5. Procédé selon la revendication 4, dans lequel on utilise de 0,05 à 1,0% en poids par rapport au poids total de l'élastomère, dudit composé phénolique encombré de blocage de groupe.

6. Procédé selon l'une quelconque des revendications 1 à 5, dans lequel le diisocyanate (c) est choisi parmi le bis(phénylisocyanate) de méthylène, le 2,4-diisocyanate de tolylène, le 2,6-diisocyanate de tolylène, le diisocyanate de phénylène, le diisocyanate de xylène ainsi que le diisocyanate de naphtalène.

7. Procédé selon l'une quelconque des revendications 1 à 6, dans lequel le diisocyanate aliphatique (b) est un composé de formule:

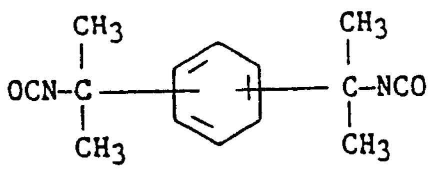

8. Procédé selon l'une quelconque des revendications 1 à 7, dans lequel le prépolymère à terminaison isocyanate, est un produit de réaction d'un ou plusieurs polyols avec un excès par rapport à la stoéchiométrie, du diisocyanate aliphatique.

9. Procédé selon l'une quelconque des revendications 1 à 8, dans lequel on utilise des quantités à peu près stoéchiométriques, du diisocyanate aliphatique (b) ainsi que du diol ou du polyol (a).

10. Elastomère de polyuréthanne, susceptible d'être préparé selon le procédé défini dans l'une quelconque des revendications 1 à 9.